Europäisches Patentamt

European Patent Office

Office européen des brevets

(11) Publication number: **0 685 810 A1**

## EUROPEAN PATENT APPLICATION
### published in accordance with Art. 158(3) EPC

(21) Application number: 95903208.7

(22) Date of filing: **12.12.94**

(51) Int. Cl.⁶: **G06K 7/06**, G06K 1/12, G06K 19/00

(86) International application number:
**PCT/JP94/02080**

(87) International publication number:
**WO 95/16972 (22.06.95 95/26)**

(30) Priority: **17.12.93 JP 343381/93**

(43) Date of publication of application:
**06.12.95 Bulletin 95/49**

(84) Designated Contracting States:
**DE FR GB IT**

(71) Applicant: **Matsuda, Masayuki**
**1-2-13 Hiyoshi-cho**
**Kokubunji-shi,**
**Tokyo 185 (JP)**
Applicant: **Fujiwara, Akinobu**
**3204, Shimohatsukari,**
**Hatsukaricho**
**Ootsuki-shi, Yamanashi 401 (JP)**

(72) Inventor: **Matsuda, Masayuki**
**1-2-13 Hiyoshi-cho**
**Kokubunji-shi,**
**Tokyo 185 (JP)**
Inventor: **Fujiwara, Akinobu**
**3204, Shimohatsukari,**
**Hatsukaricho**
**Ootsuki-shi, Yamanashi 401 (JP)**

(74) Representative: **Graf, Walter, Dipl.-Ing.**
**Sckellstrasse 1**
**D-81667 München (DE)**

(54) **INFORMATION RECORDING/READING METHOD.**

(57) Method and apparatus for recording/reading information codes, for reading information codes recorded by an electrolytic ink by a sensor using two kinds of contacts different in ionization tendency. The apparatus comprises a pair of contacts using two kinds of electrodes different in ionization tendency and information codes recorded with ionically conductive electrolyte. The present invention provide a compact and lightweight sensor which is not affected by external environment such as temperature, moisture, brightness, dust, and so forth.

3 - a                3 - b

## DETAILED DESCRIPTION OF THE INVENTION

### Field of the Invention

The present invention relates to a technical field that covers information cards, information search cards, game machine prepaid cards, POS systems, FA systems, tags, printed matters, address cards, various charge tables, securities, admission tickets, publications, cryptographic information, exhibition prepaid cards, etc.

## DESCRIPTION OF RELATED ART

As is well known, the present society is greatly dependant on the development of highly scientific techniques, and its structure and organization would not be possible without information gathering and distribution systems, and automation.

As supporting automatic recognition techniques, bar codes, data carriers, machine vision, OCRs, magnetic stripes, voice recognition, and various other procedures are in practical use.

Although these procedures satisfy the needs of society to a certain degree, improvements and advantageous modifications are demanded because information memory capacities are small, prices continue to be high, and problems of low operability and portability exist.

The most important of the key technologies that are available to satisfy such demands are data recording and data detection.

The conditions under which these recording and detection technologies are required to operate are very demanding, and stable performance is essential, whatever the surrounding environment. There should be no errors, even, for example, at sites where there is intense cold, in areas such as deserts where there are high temperatures, or at locations lying right on the equator that have high temperatures and high humidity.

Further, in practical use it is necessary for the above named technologies to be employed even in areas where there is no illumination, in dusty localities, and in small spaces. In addition, protection must be provided to prevent the forging or counterfeiting of gold notes or the like.

## PROBLEMS TO BE SOLVED BY THE INVENTION

To solve the above problems, many measures have been taken and inventions have been made, such as Japanese Unexamined Patent publication No. Sho 48-101836, "Optical reader employing an optical fiber"; Japanese Unexamined Patent publication No. Sho 47-45537, "A method and a device for reading an embossing card"; Japanese Unexamined Patent publication No. Sho 54-54049, "An electric resistance printing apparatus"; Japanese Unexamined Patent publication No. Hei 3-278987, "A recording agent, a recording medium, and recording and reading method and device"; Japanese Unexamined Patent Publication No. Hei 4-338598, "A recording body and a recording method for use with it"; and Japanese Unexamined Patent Publication No. Sho 60-83184, "Bar code reading method."

To resolve the above problems, it is one object of the present invention to provide at a low cost a compact, contact type reading and recording system that can accurately and precisely detect and read data codes even under bad conditions, such as in areas where there is no illumination and where there are high temperatures and high humidity.

## MEANS AND OPERATIONS TO SOLVE THE PROBLEMS

To achieve the above object, data codes are recorded using an ink that contains an electrolyte, and a sensor that is constituted by a negative electrode and a positive electrode of a battery contacts the data codes that are recorded using the electrolyte. Then, the generated electromotive force is detected and the data are read.

Data recording by the present invention is accomplished by preparing a thin solution with either a soluble or an oil electrolyte and an appropriate binder, and coating, printing, pasting, or carving encoded data, according to a determined rule, on paper, synthetic paper, synthetic resin, ceramics, leather, cloth, wood, glass, organisms, etc.

In data code writing and reading that are in conventional practical use, various types of energy, such as magnetic recording energy, electric energy, thermal energy, light energy, sonic energy, far infrared energy, electromagnetic energy, ultraviolet energy, or radiation energy, are supplied from an external source, and reflections, reactions, or changes in magnetic force, with respect to the energy, are monitored to detect and read the recorded information. According to the present invention, an energy incorporating sensor is provided that can read an information signal without requiring a supply of energy from an external source.

Conventionally, data writing and reading are greatly affected by dust, scratches, and external environmental conditions, such as bright illumination, high temperatures and humidity, and other external conditions. This is mostly due to the small output signal energy.

According to the present invention, since it is possible to solve the problems by increasing the output signal energy, the operating principle of a battery, which has been known as an energy container, is utilized.

In most cases, extremely thin paper or plastic are employed as a base material for tapes and cards on which information is recorded and read. It is therefore necessary for information recording material to be very thin.

According to the present invention, the recording and reading can be performed in such a manner that information codes, which have a variety of forms, can be printed with an ink that maintains its ion conductance capability even under the arid conditions that prevail in the ordinary living environment, and thereafter, when an anode and a cathode that are connected to a potentiometer are pressed against the information codes, potential differences that are generated by the ionization at the anode and the cathode can be measured.

To accomplish the present invention, the development is required of an ink that maintains its ion conductance even under arid conditions.

As a result of tests that were run with multiple compositions, it was found that the inks shown in tables 1 through 4 have practical levels of ion conductance.

Among these compositions, lithium chloride saline anhydride and lithium perchlorate are important, and especially, an element such as lithium perchlorate, which has crystal water, is very important.

Although various measures are now taken to protect against the forgery and counterfeiting of such gold notes as securities, the ultimate measure for the resolution of this problem is not yet available and is a continuing subject of investigation. However, for protection, transparency is very effective. The employment of a transparent card is an effective and practical security method because it is impossible to easily decode the code rules visually. To record colored information marks, a coloring agent need only be mixed into the ink.

Since the ion conductance inks of the present invention are almost transparent, with the ion conductance inks in tables 1, 2, and 3 having great transparency, and as these inks can be altered to obtain various colors and can therefore be used for recording information in color or for recording colorless, transparent information marks, they have broad application capabilities.

Since there is a water soluble electrolyte such as $LiCl_4 \cdot 3H_2O$ and an oil electrolyte such as polyvinyl pyrrolidone, an appropriate base material can be selected by taking into consideration the properties of the material on which information marks are to be recorded.

It is also possible for a water soluble electrolyte such as $LiCl_4 \cdot 3H_2O$ and a colorless, transparent electrolyte such as polyvinyl pyrrolidone, to be diluted, and the resultant electrolyte employed for printing on or coating, or for imprinting paper or other base materials, in order to perform transparent recording and reading.

Especially since lithium perchlorate contains crystal water, it maintains its ion conductance at normal temperature even after it has been heated and dried at a high temperature, 100°C.

Further, since solid electrolytes, such as $\beta$-$Al_2O_3$ ($\beta$-alumina), $ZrO_2$ (zirconia), and AgI, and molten salt maintain their ion conductance at high temperatures, they can be used for applications that are performed at high temperatures. For example, they can be applied for the production control or the quality control of ceramics, such as glass, pottery, and porcelain.

BRIEF DESCRIPTION OF THE DRAWINGS

Fig. 1 is a fundamental electronic circuit diagram for processing a signal from a sensor;
Fig. 2 is a block diagram for reading an electric potential;
Fig. 3 is a diagram illustrating the structure of a basic embodiment for reading data according to the present invention;
Fig. 4 is a diagram illustrating the structure of a basic embodiment for reading data according to the present invention;
Fig. 5 is a diagram illustrating the structure of a basic embodiment for reading data according to the present invention;
Fig. 6 is a diagram illustrating the structure of a basic embodiment for reading data according to the present invention;

EP 0 685 810 A1

Fig. 7 is a diagram illustrating the structure of a basic embodiment for reading data according to the present invention;

Fig. 8 is a diagram illustrating the structure of a basic embodiment for reading data according to the present invention;

Fig. 9 is a diagram illustrating the structure of a basic embodiment for reading data according to the present invention;

Fig. 10 is a diagram illustrating the structure of a basic embodiment for reading data according to the present invention;

Fig. 11 is a diagram for explaining an information recording process example using ion conductance ink;

Fig. 12 is a diagram for explaining one embodiment of a sensor terminal according to the present invention;

Fig. 13 is a diagram for explaining another embodiment of the sensor terminal according to the present invention;

Fig. 14 is a diagram for explaining another information recording process example using ion conductance ink;

Fig. 15 is a diagram for explaining additional information recording process example using ion conductance ink for which waterproofing is performed; and

Fig. 16 is a diagram for explaining one embodiment of a sensor according to the present invention.

BEST MODES FOR CARRYING OUT THE INVENTION

The embodiments of the present invention will now be described.

Embodiment for ion conductance ink

The specific compositions of ion conductance ink of the present invention that is employed to record information will be shown in tables 1 through 4.

Table 1

Embodiment of ion conductance ink

First ion conductance ink in the embodiment: A

Poly (vinyl alcohol) 8%(wt) (PVA)
  (degree of polymerization: 1,900 to 2,100) 100g
Lithium chloride (LiCl) saline anhydride . . 15g
Dehydrosodium acetate (mold suppressant) . 0.01g
Polymethylsiloxane (antifoaming agent) . 0.001g
Poly(ethylene glycol) #1200
  (stabilizer·dispersant) . . . . . . . . . 0.5g
Silicic aluminum (dispersant) . . . . . . . 1g
Talc powder (flatting agent) . . . . . . . 0.5g
Urea (humidifying agent) . . . . . . . . . . 3g

5

Table 2

| Second ion conductance ink in the embodiment: B | |
|---|---|
| Poly (vinyl alcohol) 8%(wt) (PVA) (degree of polymerization: 1,900 to 2,100) | 50g |
| Ethyl alcohol solution of 10% of polyvinyl pyrrolidone (mean molecular weight 10,000) | 100g |
| Lithium perchlorate ($LiClO_4 \cdot 3H_2O$) | 20g |
| Dehydrosodium acetate (mold suppressant) | 0.01g |
| Polymethylsiloxane (antifoaming agent) | 0.001g |
| Poly(ethylene glycol) #1200 (stabilizer·dispersant) | 0.5g |
| Silicic aluminum (dispersant) | 1g |
| Talc powder (flatting agent) | 0.5g |

Table 3

| Sixth ion conductance ink in the embodiment: C | |
|---|---|
| Water acrylic resin emulsion | 100g |
| Lithium perchlorate ($LiClO_4 \cdot 3H_2O$) | 15g |
| Dehydrosodium acetate (mold suppressant) | 0.01g |
| Polymethylsiloxane (antifoaming agent) | 0.001g |
| Poly(ethylene glycol) #1200 (stabilizer·dispersant) | 0.5g |
| Silicic aluminum (dispersant) | 1g |
| Talc powder (flatting agent) | 0.5g |

Table 4

| Third ion conductance ink in the embodiment: D |
|---|
| Alkyleneoxide (product name of Daiichi Seiyaku Co., Ltd.; lithium chloride solution of ion conductor polymer) |
| Fourth ion conductance ink in the embodiment: E |
| Alkyleneoxide liquid oligomer diluted with a solvent was printed on a fabric and heated. Then, the result was bridged by irradiation of UV or EB. |
| Fifth ion conductance ink in the embodiment: F |
| Solution obtained by diluting Technogel (trademark of Sekisui Plastics Co., Ltd.) with an organic solvent. |

6

Electrolyte ink detection sensor

With respect to the ion conductance inks in tables 1 through 4, usually, two, three or more electrode materials that have different ionizations are employed for an electrolyte ink detection sensor of the present invention.

Even more often, two electrode materials that have different ionizations are employed for an electrolyte ink detection sensor of the present invention.

Cathode

The specific cathodes that are used, in the order that begins with the one that has the smallest ionization as a cathode, are as follows: Au < Pt < Hg < Pd < Ag < Te < Cu < Bi < As < Sb < H. From the view point of potential difference, activity at the surface of an electrode, and mechanical strength, Au, Pt, Pd, and Ag are appropriate cathode materials.

Anode

The specific anodes that are used, in the order that begins with the one that has the a largest ionization as an anode, are as follows: Li > Cs > Rb > K > Ba > Sr > Ca > Na > La > Mg > Ti > Be > Al > Mn > Zn > Cr > Ga > Fe > Cd > In >Co > Ni > Sn > H. From the view point of the potential difference, the activity at the surface of an electrode, and mechanical strength, Al, Zn, Cr, Co, and Ni are appropriate anode materials. Real measurement of electric potential (electromotive force)

It is not necessary to use the output of an information read signal as power. On the contrary, to acquire a stable output potential an ion conductance ink having a greater internal impedance is desirable.

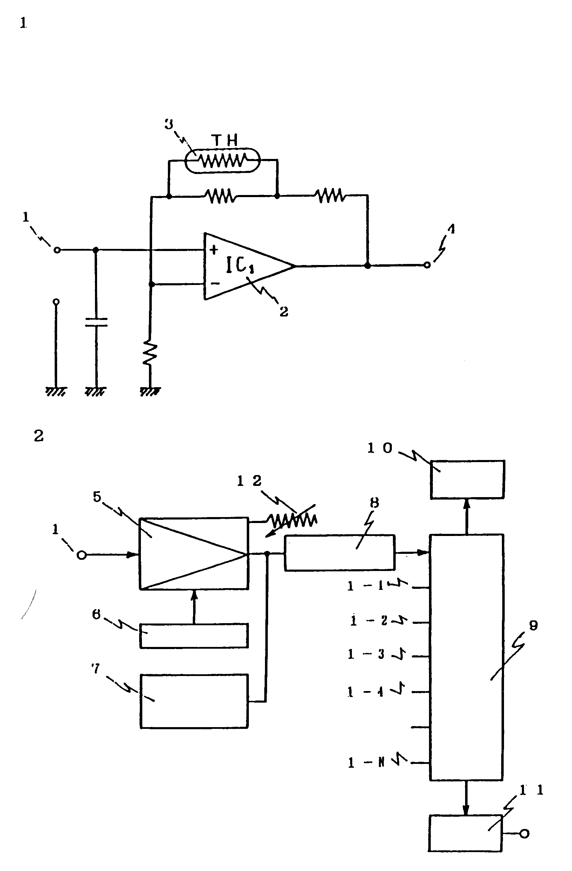

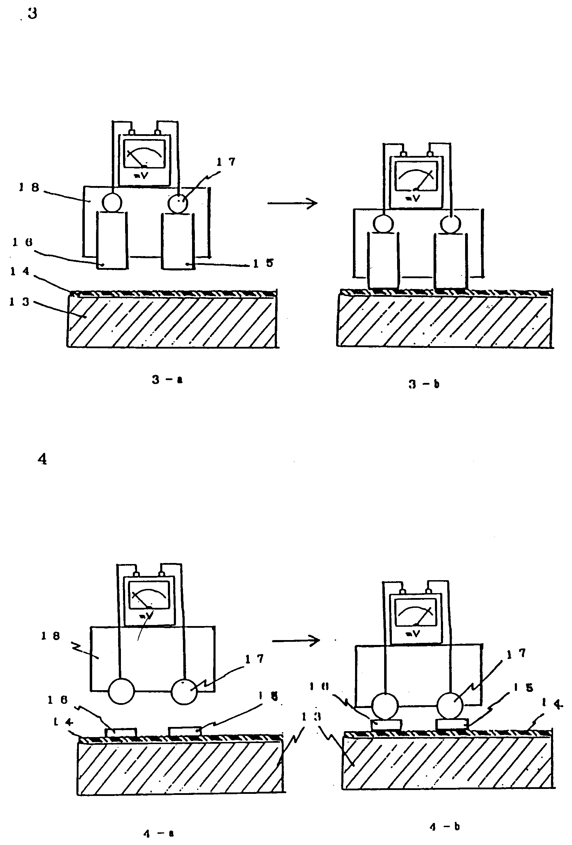

An FET operational amplifier 2 in the basic electronic circuit in Fig. 1 processes a signal 1 from a sensor that is input at a sensor terminal, and a high input impedance voltage amplifier 5, of 100 MΩ or greater, of a measuring device in the block diagram in Fig. 2 is employed for the real measurement of the electric potential.

The input signal 1 from the sensor terminal is amplified by the high input impedance amplifier 5, for which temperature correction 6 is performed, and the result is compared with a reference voltage 7. The difference is again amplified by a differential amplifier 8 and the result is input to a read determiner 9. This is shown on a display 10 and at the same time is input to a controller 11 to be used as an output signal 4. A variable resistor 12 is so connected that it can be employed to set an electric potential required when only an electric potential of a determined (range) width is received as a signal.

The results are shown in table 5.

A battery circuit was formed by contacting printed areas, in which the first through fourth ion conductance inks in the embodiment were employed as electrolytes, with the various combinations of cathodes and anodes given below and the following electric potential differences were measured.

Table 5

| | Anode/Cathode | Ion Conductance Ink | Potential Difference |
|---|---|---|---|
| 1. | (-) Al/Ag ( + ) | AD<br>BEF<br>C | 600 - 700 mV<br>850 - 900 mV<br>1000 -1200 mV |
| 2. | (-) Zn/Cu ( + ) | ADEF<br>B<br>C | 200 - 300 mV<br>600 - 650 mV<br>800 - 850 mV |
| 3. | (-) Ni/Ag ( + ) | A<br>BD<br>CEF | 50 - 100 mV<br>150 - 200 mV<br>200 - 300 mV |
| 4. | (-) Brass/Ag ( + ) | AF<br>BD<br>CE | 150 - 700 mV<br>200 - 250 mV<br>250 - 300 mV |
| 5. | (-) Ti/Ag ( + ) | A<br>B<br>CDEF | 100 - 150 mV<br>150 - 200 mV<br>300 - 350 mV |
| 6. | (-) SUS/Ag ( + ) | A<br>B<br>CDEF | 50 - 100 mV<br>100 - 200 mV<br>300 - 350 mV |
| 7. | (-) Ni/Pt ( + ) | ADE<br>BF<br>C | 50 - 80 mV<br>100 - 200 mV<br>300 - 400 mV |
| 8. | (-) Zn/Pt ( + ) | AF<br>B<br>CDE | 200 - 300 mV<br>500 - 600 mV<br>800 - 900 mV |

With the combinations (3, 11, 19), Ni/Pt (7, 15, 23), and Zn/Pt (8, 16, 24), an inactive material is generated on the electrode surface and causes the electric potential to drop drastically, and stable measurement cannot be conducted. With the employment of Ag, since an oxide film, or a saline material such as chloride, on the surface is changed to an active material (depolarizer) with which it is difficult to obtain a reaction with an electrode, it is assumed that the voltage is hardly reduced. The theoretical potential difference for Al/Ag is 2,460 mV, for Zn/Cu is 1,100 mV, and for Ni/Ag is 1.049 mV. Their real measurement values are very small because from 3 M$\Omega$ to 20 M$\Omega$/mm$^2$ the resistance of ion conductance ink is great.

For actual use, measurements must be taken and protection must be provided to prevent soiling and dampening, and mischievous alterations and forgeries. More specifically, such measurements and protection can be achieved by the provision of a third electrode that serves as a comparison electrode and can determine whether or not information is true. The ionization of the third electrode can be either identical to, or different from the ionization of one of the electrodes, and can be selected as needed in consonance with the application and conditions.

Specific examples of various uses that can be selected as needed in consonance with the application and conditions will now be explained.

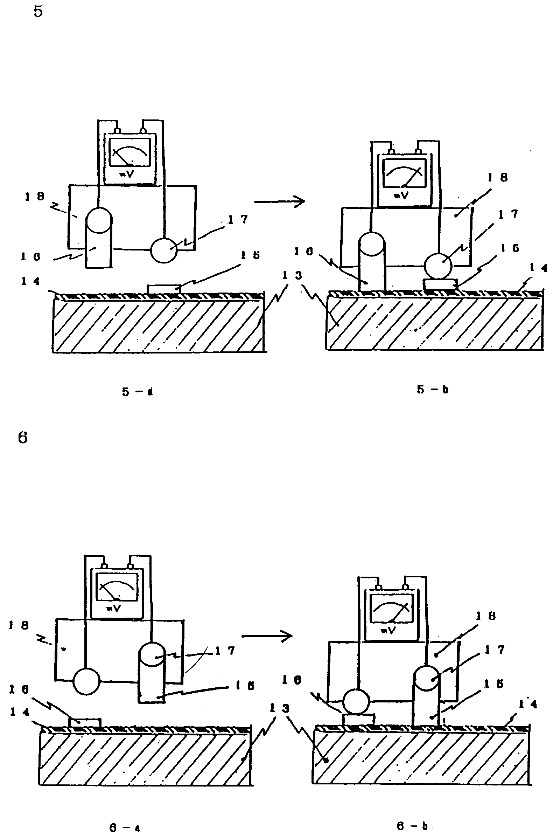

In Fig. 3-a is shown a sensor device 17, which is constituted by a cathode electrode 15 and an anode electrode 16, in relation to a base member 13, such as paper, that is coated with the ion conductance inks 14 in tables 1 through 4, and in Fig. 3-b the cathode electrode 15 and the anode electrode 16 are shown in contact with the deposited ion conductance ink 14. A battery circuit is formed with the cathode electrode 15, the anode electrode 16, both of which have different ionization, and the ion conductance ink 14. With such an information recording and reading method, a potential difference between the two electrodes is detected by a potentiometer to read the information that is so provided.

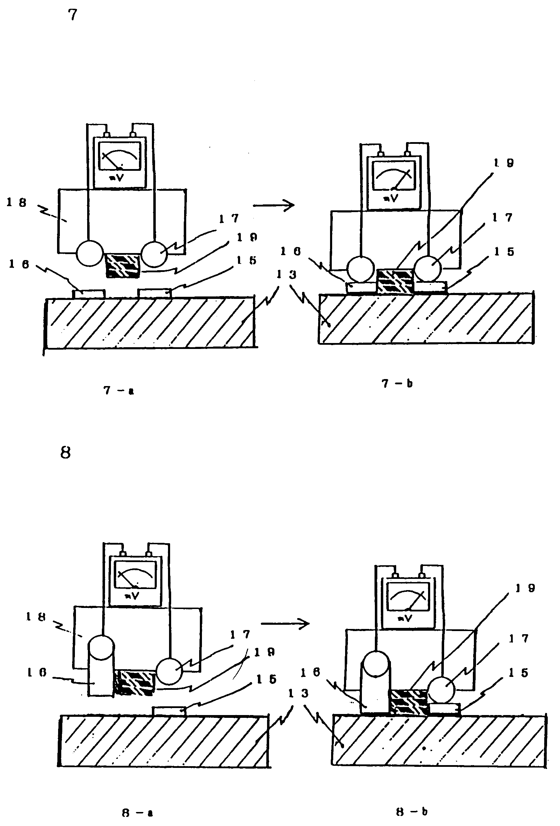

In Fig. 4-a, a cathode electrode 15 and an anode electrode 16 are deposited or printed on a base material 1 that is coated with the ion conductance inks 14 in tables 1 through 4, and a sensor device 18 that has a sensor terminal 17, which is made of the same type of metal as that of the resultant structure, is shown above the base structure. In Fig. 4-b the sensor terminal 17 of the sensor device 18 is shown in contact with the cathode electrode 15 and the anode electrode 16. In this manner, as well as in the previous case, a battery circuit is formed with the cathode electrode 15, the anode electrode 16, both of which have different ionization, and the ion conductance ink 14. With such an arrangement, an information recording and reading method is provided whereby a potential difference between the two electrodes is detected by a potentiometer to acquire information.

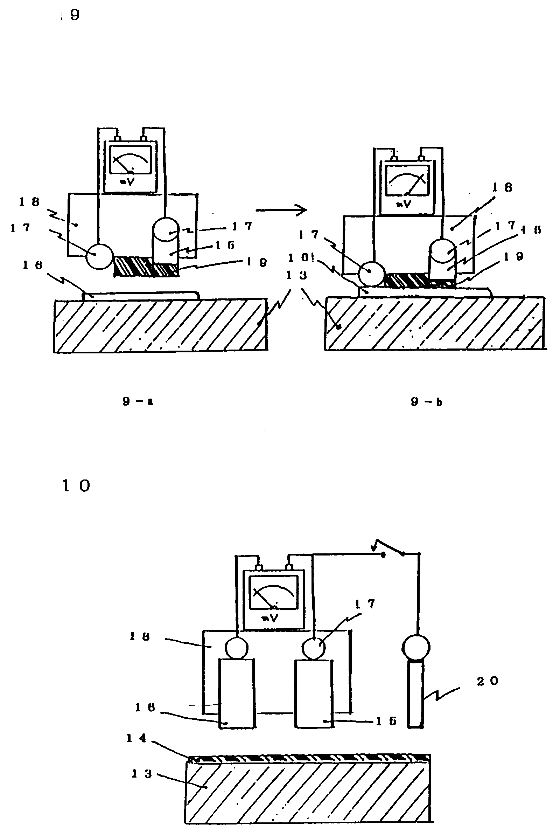

In Fig. 5-a are shown a base material 13, on which the ion conductance ink and the cathode electrode are recorded at predetermined positions by deposition or printing, and a sensor device 18, of which a sensor terminal that is opposite the cathode is constituted by an anode electrode material. In Fig. 5-b is shown the sensor device approaching and contacting the base material 13. In this manner, a battery circuit is formed that provides an information recording and reading method by which a potential difference between the two electrodes is detected by a potentiometer to acquire information.

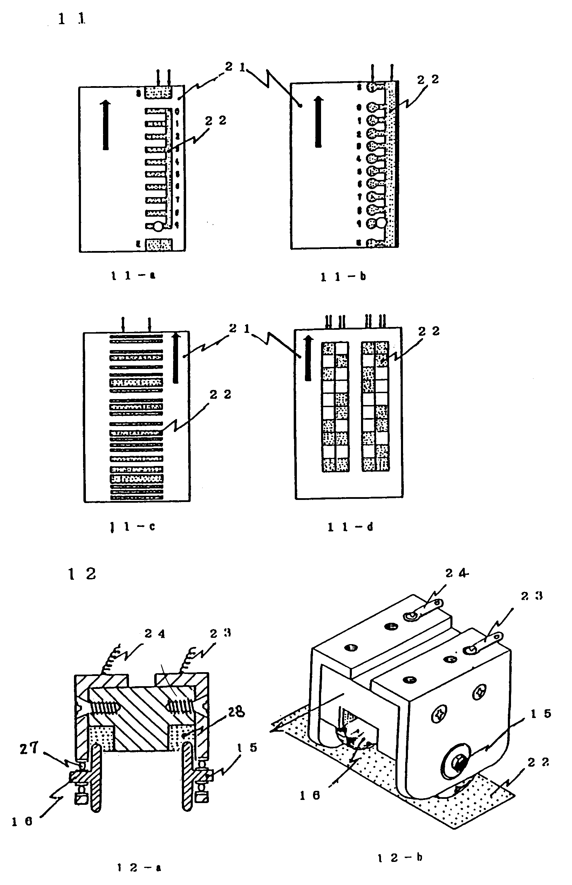

In Fig. 6-a, which is the opposite of Fig. 5, a base material, on which ion conductance ink and an anode electrode are recorded at predetermined positions by deposition or printing, and a sensor device, of which a sensor terminal opposite to the anode is made of a cathode electrode material, are shown. In Fig. 6-b is shown the sensor device approaching and contacting the base material. In this manner, a battery circuit is formed that provides an information recording and reading method by which a potential difference between the two electrodes is detected by a potentiometer to acquire information.

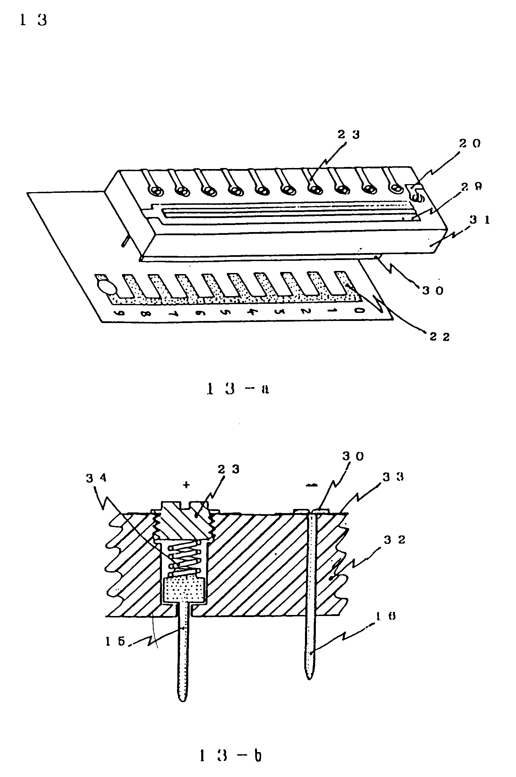

In Fig. 7-a are shown a base material, on which an electrode material that serves as an anode and an electrode material that serves as a cathode are recorded at predetermined positions by deposition or printing, and a sensor device, on the side of which ion conductance ink that includes an electrolyte is provided outside a sensor terminal. In Fig. 7-b, the sensor terminal is in contact with the anode or the cathode that is deposited or printed on the base material, and the anode is linked to the cathode by using ion conductance ink.

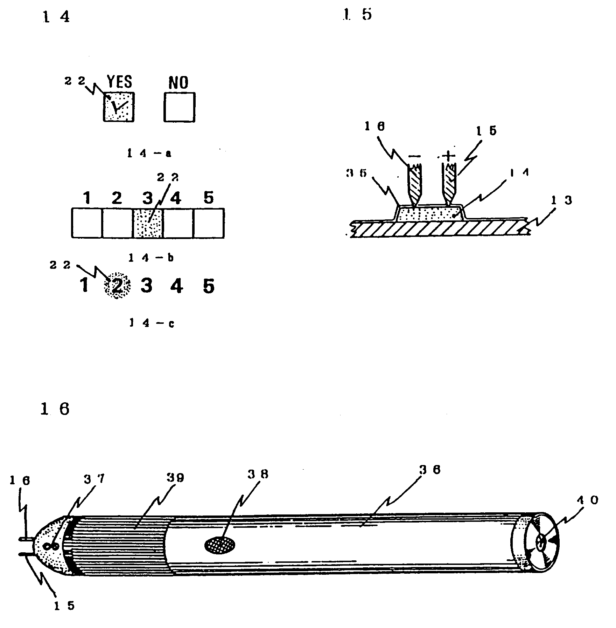

In Fig. 8-a are shown a base material, on which an electrode material that serves as a cathode is recorded at predetermined positions by deposition or printing, and a sensor device, which has an electrode material that serves as an anode and which has ion conductance ink on its terminal side. In Fig. 8-b, the anode electrode approaches the cathode electrode, and a battery circuit is formed between the anode and the cathode via the ion conductance ink to provide an information recording and reading method whereby a potential difference, which occurs as the result, is detected to acquire information.

In Fig. 9-a are shown a base material, on which an electrode material that serves as an anode is recorded at predetermined positions by deposition or printing, and a sensor device, which has an electrode material that serves as a cathode and which has ion conductance ink on its terminal side. In Fig. 9-b, the cathode electrode approaches the anode electrode, and a battery circuit is formed between the anode and the cathode via the ion conductance ink to provide an information recording and reading method whereby a potential difference, which occurs as the result, is detected to acquire information.

In Fig. 10 is shown a sensor that employs a third electrode as a detection electrode in addition to the anode electrode 16 and the cathode electrode 15. A battery circuit is formed with information that is recorded using an ion conductance ink 14, and a potential difference due to something other than the information that is recorded is detected to enhance the accuracy of the recording and the reading of information.

Examples where the present invention is applied for prepaid cards are shown in Fig. 11.

In the examples of prepaid cards in Figs. 11-a and 11-b, a prepaid card 21 is inserted in the direction that is indicated by an arrow (→). The dotted portions of the cards represent an information code 22 that is printed in ion conductance ink. An S denotes a start code, an E denotes an end code, and a comb shape portion and a comb shape portion with round distal ends denote fare codes, wherein a potential difference is generated when a sensor terminal contacts the distal end and the base of the comb portion and when that part is unused. When the card is used, it is punched as is shown in the 9th positions in Figs. 11-a and 11-b and the electrification is cut off. As this procedure is repeated and the card is punched off at the 0 position, the card is used up.

An application example for a bar code is shown in Fig. 11-c and an application example for the kalra code, which is a specific two-dimensional code, is shown in Fig. 11-d.

In Fig. 12 is shown an example of a sensor terminal that reads the information code 22 in the embodiment shown in Fig. 3 of the present invention.

Fig. 12-a is a cross sectional view of a sensor terminal, in which a cathode electrode terminal 23 and an anode electrode terminal are formed in a wheel shape and rotated, a positive output cable 25, a negative output cable 26, bearings 27, and an electrode cleaner 28 that is formed of felt.

Fig. 12-b is a perspective view of the sensor in Fig. 12-a when it is in use. The sensor is reading information 22 that is recorded in ion conductance ink while the rotary terminals are rotated in a direction that is indicted by the arrow.

In Fig. 13-a is shown another example of a sensor terminal that reads comb shape information code 22 in the embodiment shown in Fig. 2. This sensor terminal is a sensor array device that detects all the signals of information codes 0 through 9 at the same time, and that includes cathode electrode terminals 23 that are arranged in an array, a third electrode 20 that detects water leakage, a negative electrode bus bar 29, and a negative electrode terminal 30.

Fig. 13-b is a cross sectional view of the read sensor array device, wherein are shown a print wire substrate 32, a copper foil pattern 33, a negative electrode bus bar 30, a positive electrode output terminal 23, a spring 34, a positive electrode terminal 23, and a negative electrode terminal 16.

In addition, another application example is shown. In Fig. 14 is shown an example where the device is applied for test scoring. Colorless, clear, ion conductance ink is printed in advance within a square frame below YES. When a check mark is entered with a pencil, ion conductance is not affected at all, and a potential difference can be detected by contacting the sensor.

In Fig. 14-b is shown an application example for a multiple choice question. Colorless, clear, ion conductance ink is printed in advance within a square frame below 3 in Fig. 14-b, and an examinee can not see the ink. In Fig. 14-c is shown an example where colorless, clear, ion conductance ink is applied to the printed object.

Considering various modes for actual use, it is most important that dampening due to rain or sweat have no affect. As a countermeasure, as is shown in Fig. 15, ion conductance ink 14 is coated with a poly-(vinyl formal) oil ink film 35 to protect against deterioration by water and humidity. When the water and humidity deterioration preventive film is deposited, the distal end of the sensor terminal, which is sharpened, must be used.

In Fig. 16 is shown a specific sensor device 36 that is actually used as the sensor shown in Fig. 15. The sensor device 36 employs a cathode electrode terminal 15 and an anode electrode terminal 16 as sensor terminals. When they are in contact with an information code that is printed in ion conductance ink, an LED 37 that displays the result, passing or failing, is turned on. Further, included within the casing of the sensor device 36, which is appropriate for checking answers, are a buzzer 38, which signals a passing or a failing result, an electronic circuit 39, which is shown in the block diagram in Fig. 2, and a battery, and mounted on it is an interface terminal 40 that is employed for connection to a personal computer.

The recording and deletion of information can be repetitively performed, and a specific method is shown below. Insulating ink or electron conductance ink is deposited on a base material on which is recorded information with ion conductance ink, which contains an ion conductance electrolyte, in order to eliminate ion conductance, so that the recorded information can not be detected and information deletion is thus accomplished.

When ion conductance ink is deposited or printed over information that has been deleted by the above method, the information can be recorded and reproduced.

According to the present invention, an electrolyte ink detection sensor is also provided, a plurality of which are arranged for actual use so as to detect a plurality of items of recorded information at the same time.

When five electrodes whose ionization differs from each other are employed in a plurality of arranged electrolyte ink detection sensors, an electromotive force having five levels can be obtained, and as the five-level detection electromotive force for recorded information can be acquired momentarily, detection speed is increased and a detection mechanism can be simplified.

[Fig. 1]
    1:    input signal
    2:    FET operational amplifier
    3:    temperature correction thermistor
    4:    output signal
[Fig. 2]
    5:    high input impedance
    6:    temperature correction device
    7:    reference voltage device
    8:    differential amplifier
    9:    read determination device
    10:   display device
    11:   controller

12:     voltage setting variable resistor

[Fig. 3]

13:     base member

14:     ion transmission ink

15:     cathode electrode

16:     anode electrode

17:     sensor terminal

18:     sensor

## Claims

1.  An information recording and reading method, comprising the steps of:

    recording information on a base material with ion conductance ink that contains an ion conductance electrolyte;

    forming a battery circuit by contacting sensor terminals of a sensor with an anode electrode and a cathode electrode, respectively; and

    detecting a generated potential difference to record and read information.

2.  An information recording and reading method according to claim 1, wherein information is recorded on said base material with said ion conductance ink that contains said ion conductance electrolyte, and wherein said anode electrode and said cathode electrode are arranged at a predetermined interval and contact said sensor terminals to provide said battery circuit, and a generated potential difference is detected to record and to read information.

3.  An information recording and reading method according to claim 1, wherein information is recorded on said base material with said ion conductance ink, which contains said ion conductance electrolyte, and a cathode electrode material, and wherein said anode electrode that is employed as a sensor terminal is brought into contact with said ion conductance ink and the other sensor terminal is brought into contact with said cathode electrode to form a battery circuit, so that a generated potential difference is detected to record and to read information.

4.  An information recording and reading method according to claim 1, wherein information is recorded on said base material with said ion conductance ink, which contains said ion conductance electrolyte, and an anode electrode material, and wherein said cathode electrode that is employed as a sensor terminal is brought into contact with said ion conductance ink and the other sensor terminal is brought into contact with said anode electrode to form a battery circuit, so that a generated potential difference is detected to record and to read information.

5.  An information recording and reading method according to claim 1, wherein a sensor device, in which said anode electrode and said cathode electrode are arranged and recorded on said base material at a predetermined interval and are linked to each other with said ion conductance ink, and which has a battery circuit that is formed by said sensor terminals contacting said anode electrode and said cathode electrode, detects a potential difference generated between said anode electrode and said cathode electrode and records and reads information.

6.  An information recording and reading method according to claim 1, wherein a sensor device, in which a cathode electrode material is arranged and recorded on said base material, and in which one of said sensor terminals is said anode electrode, and which forms a battery circuit by bringing into contact a terminal, which is in contact with said ion conductance ink, with said cathode electrode via said ion conductance ink, detects a potential difference that is generated between said anode electrode and said cathode electrode and records and reads information.

7.  An information recording and reading method according to claim 1, wherein a sensor device, in which an anode electrode material is arranged and recorded on said base material, and in which one of said sensor terminals is said cathode electrode, and which forms a battery circuit by bringing into contact a terminal, which is in contact with said ion conductance ink, with said anode electrode via said ion conductance ink, detects a potential difference that is generated between said anode electrode and said cathode electrode and records and reads information.

8. An information recording and reading method according to claim 1, wherein said sensor employs a third electrode as a detection terminal besides said anode electrode and said cathode electrode, has a battery circuit formed within information recorded with an ion electrolyte, and detects a generated potential difference to record and read information.

9. An information recording and reading method according to claim 1, wherein said ion conductance electrolyte contains crystal water.

10. An information erasing method, for a recording method that records information on a base material with ion conductance ink that contains an ion conductance electrolyte, wherein an insulating material or an electron conductance material is deposited on a surface on which information is recorded in order to remove ion conductance and to thus erase said information.

11. An information reproducing method for again recording information by newly depositing ion conductance ink that contains an ion conductance electrolyte over information that is erased by a method according to claim 10.

図 1

図 2

3

3 - a          3 - b

4

4 - a          4 - b

14

5

5 — a

5 — b

6

6 — a

6 — b

7

7 - a

7 - b

8

8 - a

8 - b

図 9

9 − a            9 − b

図 10

1 1

1 1 - a

1 1 - b

1 1 - c

1 1 - d

1 2

1 2 - a

1 2 - b

18

1 3

1 3 — a

1 3 — b

1 4

22 YES NO
✓

1 4 - a

22

1 2 3 4 5

1 4 - b

22
1 2 3 4 5

1 4 - c

1 5

1 6 1 5
－ ＋

3 5 1 4

1 3

1 6

1 6 3 7 39 3 8 3 6

4 0

1 5

| | International application No. |
|---|---|
| | PCT/JP94/02080 |

**A. CLASSIFICATION OF SUBJECT MATTER**

Int. Cl$^6$ G06K7/06, G06K1/12, G06K19/00

According to International Patent Classification (IPC) or to both national classification and IPC

**B. FIELDS SEARCHED**

Minimum documentation searched (classification system followed by classification symbols)

Int. Cl$^6$ G06K7/06, G06K1/12, G06K19/00

Documentation searched other than minimum documentation to the extent that such documents are included in the fields searched

| Jitsuyo Shinan Koho | 1926 - 1993 |
|---|---|
| Kokai Jitsuyo Shinan Koho | 1971 - 1993 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, A, 56-94475 (Matsushita Electric Ind. Co., Ltd.), July 30, 1981 (30. 07. 81) (Family: none) | 1-11 |
| A | JP, A, 3-90977 (Toyo Ink Mfg. Co., Ltd.), April 16, 1991 (16. 04. 91) & EP, A1, 416826 | 1-11 |
| A | JP, A, 1-295897 (Dainippon Printing Co., Ltd.), November 29, 1989 (29. 11. 89) & EP, A2, 342967 | 1-11 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| February 23, 1995 (23. 02. 95) | March 20, 1995 (20. 03. 95) |

| Name and mailing address of the ISA/ | Authorized officer |
|---|---|
| Japanese Patent Office | |
| Facsimile No. | Telephone No. |

Form PCT/ISA/210 (second sheet) (July 1992)